# EUROPEAN PATENT SPECIFICATION

(11) **EP 2 723 599 B1**
(45) Date of publication and mention of the grant of the patent: **19.08.2015**
(21) Application number: 12740681.7
(22) Date of filing: 19.06.2012
(51) Int. Cl.: B60K 17/28, B60K 17/26, B60K 25/02

(54) **A DEVICE FOR AND METHOD OF OPERATING A POWER TAKE OFF IN A MOTOR VEHICLE THROUGH THE GEAR BOX**
VORRICHTUNG UND VERFAHREN FÜR DEN BETRIEB EINER ZAPFWELLE BEI EINEM KRAFTFAHRZEUG ÜBER DAS GETRIEBE
DISPOSITIF ET PROCÉDÉ D'UTILISATION D'UNE PRISE DE FORCE SUR UN VÉHICULE À MOTEUR PAR L'INTERMÉDIAIRE DE LA BOÎTE DE VITESSES

(30) Priority: 23.06.2011 IT TO20110547
(43) Date of publication of application: 30.04.2014
(73) Proprietor: VHIT S.p.A., 26010 Offanengo (CR) (IT)
(72) Inventor: Leonardo, Cadeddu, I-26010 Offanengo (CR) (IT); Juergen, Boss, I-26010 Offanengo (CR) (IT)
(74) Representative: Robba, Pierpaolo
(86) International application number: PCT/IB2012/053079
(87) International publication number: WO 2012/176116

(56) References cited:
- DE-A1- 19 730 858
- DE-A1-102009 035 397

## Description

### Field of the invention

The present invention relates to motor vehicles with mechanical gear box, and more particularly it concerns a device for operating a power take off (PTO) in a motor vehicle through the gear box.

### State of the art

Motor vehicles are equipped with ancillary devices (e.g., vacuum pumps, to which particular reference will be made hereinafter for the sake of convenience of description), which are mechanically driven by the vehicle motor and therefore operate only when the motor is turned on. This may create problems to the driver when the vehicle is moving: one can think for instance to the pump of a servo-brake and to the impossibility of operating the brakes when the motor is turned off.

The new strategies of reduction of fuel consumption and CO₂ emissions provide for turning off the thermal motor for short periods even when the vehicle is travelling (e.g. in case of slowing down or jerking or yet of travelling with the gear box in neutral), and it is clear that functions such as braking are to be ensured also under such conditions,

In the considered example of the vacuum pumps, the problem could be solved by using, in place of mechanical pumps, electric pumps driven by an electric motor in turn controlled by the electronic control unit of the vehicle. Yet, such a solution requires an additional electric motor that affects the operation of the electronic control unit. Moreover, electric pumps are more expensive and heavier and have limited performance and operating life and, in case of hybrid vehicles, they absorb power from the electric power storage batteries.

Thus, it is of interest the possibility of mechanically driving ancillary devices independently of turned on/off state of the motor.

Hydraulic pumps for use in motor vehicles have already been proposed, which are connected to PTOs driven by the drive system of the vehicle. Examples are disclosed in DE 102005009409, DE 202006019306, KR 20020035315. Such PTOs cannot be operated when the motor is turned off.

JP 2005280605 discloses a pump that, when the vehicle motor is turned off, can be operated through a belt by a motor-generator also driving other ancillary devices.

CN 101885329 discloses a vacuum pump connected to the vehicle gear box. The pump is intended to ensure a more reliable vacuum level for a servo brake of a vehicle in which a single vacuum pump driven by a generator is provided. Also such a pump cannot operate when the motor is turned off, and hence it does not solve the problem. Document DE 197 30858 discloses a device according to the preamble of claim 1.

### Summary of the invention

It is an object of the invention to provide a device driven by the mechanical gear box of a motor vehicle with internal combustion engine, in order to operate ancillary devices of the vehicle while the vehicle itself is moving, even when the motor is turned off or is disconnected from the drive system.

The device includes a kinematic mechanism arranged to transmit to a power take off to which an ancillary device, for instance a vacuum pump, is connected, the rotary movement imparted by the vehicle motor to the input shaft of the gear box or, in the alternative, the rotary movement imparted to the output shaft of the gear box by the rotation of the input shaft or by the vehicle movement.

Preferably, the kinematic mechanism transmits the rotary movement of the output shaft to the power take off when the input shaft is not operated by the motor or is operated at a speed lower than that of the output shaft.

In a preferred embodiment, the kinematic mechanism includes:
- a first ratchet arranged to make integral for rotation in a first direction the input shaft and a first rotating member (in particular, a pinion gear for a chain) of a driving system arranged to transmit the movement of the input shaft to the power take off; and
- a second ratchet arranged to make integral for the rotation in the first direction a gear operable by the output shaft and a second rotating member (in particular, a second pinion gear for a chain) of the driving system, rigidly connected to the power take off, in order to transmit the movement of the output shaft to the power take off.

The invention also provides a method of operating a power take off through the gear box of a motor vehicle, and a mechanical gear box equipped with the device according to the invention.

### Brief description of the drawings

Other features and advantages of the invention will become apparent from the following description of preferred embodiments, given by way of non limiting examples with reference to the accompanying drawings, in which:
- Fig. 1 is a side view of a manual gear box of a motor vehicle, equipped with the device according to the invention; and
- Fig. 2 is a front view of the device according to the invention.

### Detailed description of preferred embodiments

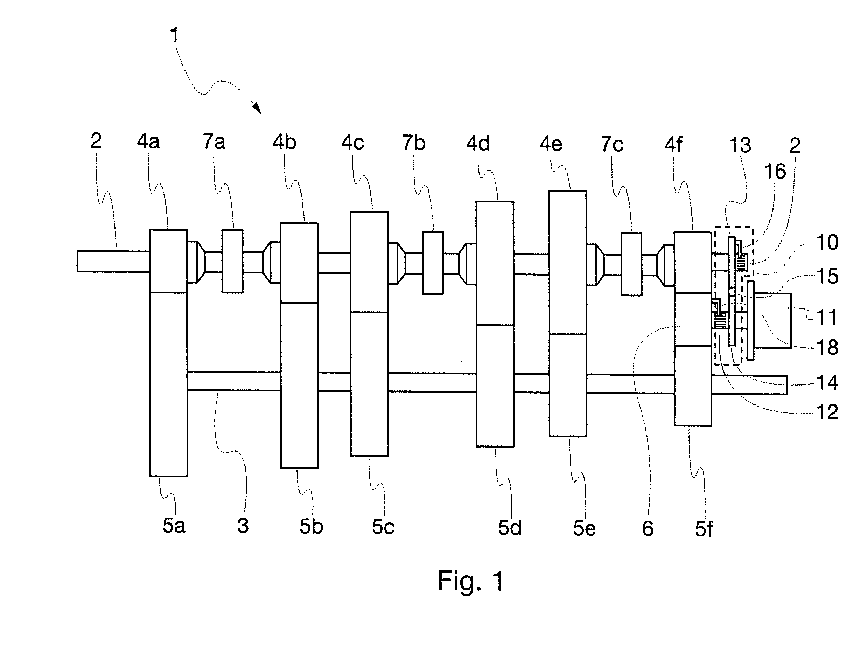

Fig. 1 shows by way of example a five-gear manual gear box 1, which has associated therewith a device 10 according to the invention for driving through the gear box a power take off to which an ancillary device 11, for instance a vacuum pump, is connected.

In known manner, gear box 1 has a primary shaft or input shaft 2, driven by the motor, and a secondary shaft or output shaft 3, transmitting the movement to the wheels. Gears 4a...4f are mounted idle on shaft 2, and each of them can be made integral for rotation with the shaft through a sleeve or synchroniser 7a...7c operated by the gear lever when a gear is engaged. Shaft 3 is integral for rotation with a plurality of gears 5a...5f, each meshing with a corresponding gear 4a...4f on shaft 2. Gears denoted by suffixes a...e correspond to the forward gears, and gears 4f, 5f correspond to the reverse gear. Reference numeral 6 denotes the so-called "idle gear", connected between gears 4f, 5f to allow inverting the rotation of secondary shaft 3 in case of reversing, when gear 4f is selected by synchroniser 7c.

Pump 11 is arranged in correspondence of idle gear 6, which is mounted idle on shaft 12 of pump 11. Shaft 12 has connected thereto device 10 according to the invention, which can transmit the rotary movement of the primary shaft or the secondary shaft of the gear box to shaft 12.

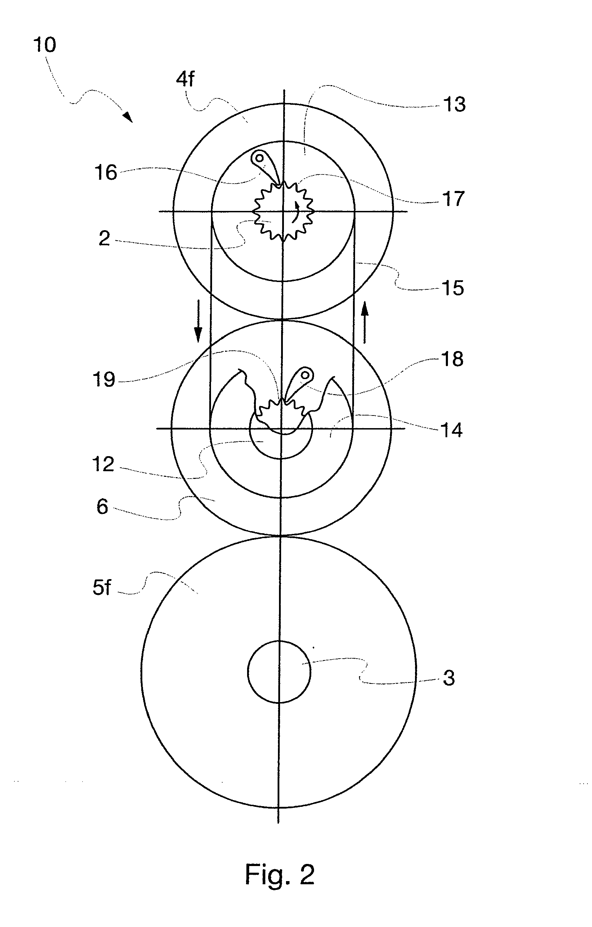

Referring also to Fig. 2, device 10 includes a first pinion gear 13 mounted idle on input shaft 2, and a second pinion gear, integral for rotation with shaft 12 of pump 11. A chain 15 meshes with both pinion gears 13, 14. A first pawl 16 is pivotally mounted on one face of pinion gear 13 (in the illustrated embodiment, the face turned towards the outside of gear box 1) and it cooperates with a substantially saw-tooth toothing 17 (for the sake of simplicity, a conventional "free wheel" has been schematised in this manner), formed on primary shaft 2, in order to build a first ratchet. A second pawl 18 is pivotally mounted on one face of idle gear 6 (in the illustrated embodiment, the face turned towards pump 11) and it cooperates with a substantially saw-tooth toothing 19 (for the sake of simplicity, a second "free wheel" has been schematised in this manner), formed on shaft 12 of pump 11, in order to build a second ratchet. The pivotal connection of pawl 16 and the arrangement of teeth 17 are such that shaft 2 pulls pinion gear 13 into rotation when the shaft rotates in the direction imposed by the normal rotation of the engine (in the illustrated example, the counterclockwise direction). The pivotal connection of pawl 18 and the arrangement of teeth 19 are such that idle gear 6 pushes pinion gear 14, and hence shaft 12, into rotation when the idle gear rotates in counterclockwise direction.

The table resumes the possible combinations of vehicle movement and conditions of the gear box and the clutch normally occurring when a vehicle is being used, and the resulting conditions of the power take off and hence of the pump.

**TABLE**

| | **Vehicle movement** | **Engine** | **Gear** | **Clutch** | **Power take off** | **Speed of the power take off** |
|---|---|---|---|---|---|---|
| 1 | stationary vehicle | on | neutral | engaged | operating | speed of the primary shaft |
| 2 | stationary vehicle | on | neutral | disengaged | stationary | === |
| 3 | forward movement | on | forward / neutral | engaged | operating | max. out of primary and secondary shaft speeds |
| 4 | forward movement | off | neutral | engaged | operating | speed of the secondary shaft |
| 5 | forward movement | off | forward | disengaged | operating | max. out of primary and secondary shaft speeds |
| 6 | forward movement | off | reverse | from disengaged to engaged | operating (with protection against counterrotation) | speed of the secondary shaft |
| 7 | backward movement | on | reverse/ neutral | engaged | operating | speed of the primary shaft |
| 8 | backward movement | off | neutral | engaged | stationary | === |
| 9 | backward movement | off | reverse | disengaged | operating | speed of the primary shaft |
| 10 | backward movement | off | forward | from disengaged to engaged | stationary (with protection against counterrotation) | === |

The combination stationary vehicle, engine off is not indicated, since of course under such conditions the pump operation is not required.

The different situations will now be explained.
1. Shaft 2 is made to rotate in counterclockwise direction by the engine and it makes pinion gear 13 rotate. The latter makes pinion gear 14 rotate through chain 15, thereby making shaft 12 rotate. Secondary shaft 3 and idle gear 6 are stationary and ratchet 18, 19 lets shaft 12 freely rotate relative to idle gear 6. The pump thus receives the rotary movement imparted by the engine to the primary shaft.
2. Shaft 2 is disconnected from the engine and hence it is stationary; also shaft 3 and idle gear 6 are stationary, hence shaft 12 does not rotate.
3. The same conditions as in case 1 occur for shaft 2 and pinion gear 13. When a forward gear is engaged, one of gears 4a...4e is made integral for rotation with shaft 2 and it makes shaft 3 rotate (in clockwise direction) through the corresponding gear 5a...5e. Shaft 3 in turn makes idle gear 6 rotate in counterclockwise direction and gear 6, under such conditions, makes pinion gear 14 rotate. The fastest pinion gear will drive the other one. In case the gear box is in neutral, the only difference is that shaft 3 is made to rotate in clockwise direction because of the vehicle movement, and not by shaft 2. The pump receives either the rotary movement imparted by the engine to the primary shaft or, through the idle gear 6, the rotary movement of the output shaft imparted by either the primary shaft or the vehicle movement.
4. Shaft 2 is stationary. Shaft 3 is made to rotate in clockwise direction by the vehicle movement and it makes gear 6 rotate in counterclockwise direction. Gear 6 makes pinion gear 14 rotate like in the previous case. Since the gear box is in neutral, gear 6 cannot make shaft 2 rotate. The pump receives, through the idle gear, the rotary movement imparted by the vehicle movement to the secondary shaft.
5. The same conditions as in case 4 occur for shaft 3, gear 6 and pinion gear 14. Shaft 2 is not driven by the engine, but one of gears 5a...5e makes it rotate in counterclockwise direction through the corresponding gear 4a...4e, so that shaft 2 makes pinion gear 13 rotate. The situation is similar to that of case 3.
6. The same conditions as in case 5 occur for shaft 3, gear 6 and pinion gear 14. Idle gear 6 makes shaft 2 rotate in clockwise direction through gear 4f, and pinion gear 13 remains idle. The pump is driven by the secondary shaft through the idle gear. If the clutch is engaged, shaft 2 causes counterrotation of the engine, which is made to rotate in clockwise direction. The counterrotation of the engine causes no problem for the pump, since pinion gear 13 is idle.
7. The same conditions as in case1 occur for shaft 2 and pinion gear 13. If the reverse gear is engaged, gear 4f makes idle gear 6 rotate in clockwise direction, and therefore gear 6 remains idle on shaft 12. Shaft 3 does not intervene in driving the pump, which therefore receives the movement imparted by the engine to the primary shaft. If the gear box is in neutral condition, the idle gear is made to rotate (still in clockwise direction) by shaft 3 in place of shaft 2, but this does not cause any change for the pump.
8. Shaft 2 is not driven by the engine, whereas shaft 3 is made to rotate (in clockwise direction) by the wheel movement and it makes idle gear 6 rotate in clockwise direction. Gear 6 remains therefore idle on shaft 12. Moreover, the latter cannot be driven by shaft 2 either, since all gears 4 are idle and cannot transmit the movement of shaft 3.
9. The same conditions as in case 8 occur for shaft 3 and gear 6. Shaft 2 is not driven by the engine, yet it is made to rotate in counterclockwise direction by gear 6 through gear 4f, and hence it makes pinion gear 13 rotate like in case 1. The pump receives the movement of the secondary shaft through the primary shaft.
10. The same conditions as in cases 8 and 9 occur for shaft 3 and gear 6. The counterclockwise rotation of shaft 3 makes shaft 2 rotate in clockwise direction through a gear pair 4a, 5a...4e, 5e, and therefore shaft 2 rotates idle relative to pinion gear 13. The clutch engagement creates again the same conditions as disclosed in case 6.

The preceding description makes it clearly apparent that the pump or other ancillary device can operate also when the motor is turned off, provided the vehicle is moving, and hence the problems set forth above are solved. Moreover, the device provides a safety feature in case of manoeuvres that could cause damages to the pump, as those disclosed in cases 6 and 10. Furthermore, the pump or other ancillary device does not require ancillary motors.

An advantage of the device according to the invention is moreover its versatility of application in a vehicle. The device can be used not only for directly operating a pump or another device connected to the power take off, but also for operating more complex systems, for instance systems driving hydraulic pumps in order to charge suitable hydraulic accumulators during the slowing down/braking phase or, in case of lack of pressure, even during normal travel of a vehicle. The accumulated energy can then be used for operating hydraulic brakes or actuating cylinders or for the servo-assistance of various controls, including the drive, and so on.

Advantageously, the application of the device to moving members of the vehicle can also allow directly assisting devices for slowing down, braking or driving in the vehicle itself.

The invention can also be disclosed in terms of a method of operating a power take off through a mechanical gear box. The method includes the step of transmitting to the power take off either the rotary movement imparted by the vehicle engine to an input shaft of the gear box or the rotary movement imparted to the output shaft of the gear box by the rotation of the input shaft or by the vehicle movement. The rotary movement of the output shaft is transmitted to the power take off through the input shaft or through the idle gear when the input shaft is not driven by the engine or is driven at a speed lower than that of the output shaft.

It is clear that the above description is given only by way of non-limiting example and that changes and modifications are possible without departing from the scope of the invention as defined in the claims. In particular, the various mechanical components of the kinematic mechanism may be replaced: for instance, in place of a chain transmission, a belt transmission can be used. Moreover, even though the invention has been disclosed in connection with a manual gear box, it may be applied also to robot-controlled mechanical gear boxes, such as the one known as "selespeed".

## Claims

1. A device for operating a power take off through a mechanical gear box (1) in a motor vehicle, the gear box including:
- an input shaft (2), which can be made to rotate by the vehicle motor;
- an output shaft (3) connected to driving wheels of the vehicle; and
- a kinematic mechanism (10) arranged to transmit to the power take off the rotary movement imparted to the input shaft (2) or to the output shaft (3), respectively, said rotary movement of the output shaft (3) being imparted either by the rotation of the input shaft (2) or by the vehicle movement;
the device being **characterised in that** said kinematic mechanism (10) includes:
- a first ratchet (16, 17) arranged to make integral for rotation in a first direction the input shaft (2) and a first rotating member (13) of a driving system (13, 15, 14) arranged to transmit to the power take off the movement of the input shaft (2); and
- a second ratchet (18, 19) arranged to make integral for the rotation in the first direction a gear (6) operable by the output shaft (3) and a second rotating member (14) of the driving system (13, 15, 14), rigidly connected to the power take off, in order to transmit to the power take off the movement of the output shaft (3).

2. The device as claimed in claim 1, wherein the kinematic mechanism (10) is arranged to transmit to the power take off the rotary movement of the output shaft (3) when the input shaft (2) is not operated by the motor or is operated at a speed lower than that imparted to the output shaft (3).

3. The device as claimed in claim 1 or 2, wherein the kinematic mechanism (10) is arranged to transmit to the power take off the rotary movement of the output shaft (3) through the input shaft (2) or through the gear (6) operable by the output shaft (3).

4. The device as claimed in any one of preceding claims, wherein the kinematic mechanism (10) includes:
- a first pinion gear (13) mounted idle on the input shaft (2);
- a second pinion gear (14), integral for rotation with the power take off;
- a chain (15) wound on the first and second pinion gears (13, 14) for transmitting to the power take off the rotary movement of the first pinion gear (13);
and wherein the first ratchet includes a toothing (17) on the input shaft (2) and a pawl (16) pivotally mounted on the first pinion gear (13), and the second ratchet includes a toothing (19) on the power take off and a pawl (18) pivotally mounted on the gear (6) operable by the output shaft.

5. A method of operating a power take off through a mechanical gear box (1) in a motor vehicle, comprising the step of:
- transmitting to the power take off the rotary movement imparted to either an input shaft (2) of the gear box (1) or an output shaft (3) of the gear box (1), respectively, said rotary movement of the output shaft (3) being imparted either by the rotation of the input shaft (2) or by the vehicle movement,
**characterised in that** said operation of transmitting the rotary movement comprises the steps of:
- making integral for rotation in a first direction the input shaft (2) and a first rotating member (13) of a driving system (13, 15, 14) arranged to transmit to the power take off the movement of the input shaft (2); and
- making integral for the rotation in the first direction a gear (6) operable by the output shaft (3) and a second rotating member (14) of the driving system (13, 15, 14), rigidly connected to the power take off, in order to transmit to the power take off the movement of the output shaft (3).

6. The method as claimed in claim 5, wherein the rotary movement of the output shaft (3) is transmitted to the power take off when the input shaft (2) is not operated by the motor or is operated at a speed lower than that of the output shaft (3).

7. The method as claimed in claim 5 or 6, wherein the rotary movement of the output shaft (3) is transmitted to the power take off through the input shaft (2) or through the gear (6) operable by the output shaft (3).

8. The method as claimed in any one of claims 5 to 7, wherein:
- the step of making the input shaft (2) and a first rotating member (13) of a driving system (13, 15, 14) integral for rotation in a first direction is performed by a first ratchet (16, 17); and
- the step of making the gear (6) operable by the output shaft and a second rotating member (14) of the driving system (13, 15, 14), rigidly connected to the power take off, integral for the rotation in the first direction, is performed by a second ratchet (18, 19).

9. The method as claimed in claim 5, wherein the transmission to the power take off of the rotary movement imparted by the motor to the input shaft (2) and the transmission to the power take off of the rotary movement of the output shaft (3) through the input shaft (2) further comprise the step of:
- transmitting the movement of the first rotating member (13) to the second rotating member (14) of the driving system (13, 15, 14), integral for rotation to the power take off.

10. A mechanical gear box (1) for motor vehicles, including a power take off and a device as claimed in any one of claims 1 to 4 arranged for operating the power take off.

## Patentansprüche

1. Vorrichtung für den Betrieb einer Zapfwelle mittels eines mechanischen Getriebes (1) in einem Kraftfahrzeug, wobei das Getriebe aufweist:
• eine Antriebswelle (2), die durch den Fahrzeugmotor in Drehung versetzt werden kann;
• eine Abtriebswelle (3), welche an die angetriebenen Räder des Fahrzeugs angeschlossen ist; und
• einen kinematischen Mechanismus (10), der dafür eingerichtet ist, die von der Antriebswelle (2) bzw. der Abtriebswelle (3) vermittelte Drehung auf die Zapfwelle zu übertragen, wobei die Drehbewegung der Abtriebswelle (3) entweder durch die Drehung der Antriebswelle (2) oder die Fahrzeugbewegung vermittelt wird;
wobei die Vorrichtung **dadurch gekennzeichnet ist, dass** der kinematische Mechanismus (10) aufweist:
• ein erstes Gesperr (16,17), das dafür eingerichtet ist, die Antriebswelle (2) und ein erstes rotierendes Bauteil (13) eines Antriebssystems (13,14,15) für eine Drehung in einer ersten Richtung zu koppeln, wobei das Antriebssystem dafür eingerichtet ist, eine Bewegung der Antriebswelle (2) auf die Zapfwelle zu übertragen; und
• ein zweites Gesperr (18,19), das dafür eingerichtet ist, ein Zahnrad (6), das durch die Abtriebswelle (3) angetrieben werden kann, und ein zweites rotierendes Bauteil (14) des Antriebssystems (13,14,15) für die Drehung in die erste Richtung zu koppeln, wobei das Antriebssystem starr an die Zapfwelle angeschlossen ist, um die Bewegung der Abtriebswelle (3) auf die Zapfwelle zu übertragen.

2. Vorrichtung nach Anspruch 1, wobei der kinematische Mechanismus (10) dafür eingerichtet ist, die Drehbewegung der Abtriebswelle (3) auf die Zapfwelle zu übertragen, wenn die Antriebswelle (2) nicht von dem Motor angetrieben ist oder mit einer Geschwindigkeit angetrieben wird, die kleiner als die von der Abtriebswelle (3) vermittelte Geschwindigkeit ist.

3. Vorrichtung nach Anspruch 1 oder 2, wobei der kinematische Mechanismus (10) dafür eingerichtet ist, die Drehbewegung der Abtriebswelle (3) auf die Zapfwelle über die Antriebswelle (2) oder das Zahnrad (6), das von der Abtriebswelle (3) angetrieben werden kann, zu übertragen.

4. Vorrichtung nach einem der vorstehenden Ansprüche, wobei der kinematische Mechanismus (10) aufweist:
• ein erstes Ritzel (13), das frei auf der Antriebswelle (2) gelagert ist;
• ein zweites Ritzel (14), das zur Rotation mit der Zapfwelle fest verbunden ist;
• eine Kette (15), die um das erste und das zweite Ritzel (13;14) herumgeführt ist, um die Drehbewegung des ersten Ritzels (13) auf die Zapfwelle zu übertragen;
• und wobei das erste Gesperr eine Zahnung (17) auf der Antriebswelle (2) und eine Sperrklinke (16), die drehbar an dem ersten Ritzel (13) befestigt ist, aufweist und das zweite Gesperr eine Zahnung (19) auf der Zapfwelle und eine Sperrklinke (18), die drehbar an dem Zahnrad (6), das durch die Abtriebswelle (3) antreibbar ist, aufweist.

5. Verfahren zum Betreiben einer Zapfwelle über ein Getriebe (1) in einem Kraftfahrzeug, mit dem Schritt:
• Übertragen der entweder durch eine Antriebswelle (2) des Getriebes (1) oder eine Abtriebswelle (3) des Getriebes (1) bewirkten Drehbewegung auf die Zapfwelle, wobei die Drehbewegung der Abtriebswelle (3) entweder durch die Drehung der Antriebswelle (2) oder die Fahrzeugbewegung vermittelt wird,
**dadurch gekennzeichnet, dass** der Vorgang des Übertragens der Drehbewegung die folgenden Schritte aufweist:
• Koppeln der Antriebswelle (2) und eines ersten rotierenden Bauteils (13) eines Antriebssystems (13,14,15), das dafür eingerichtet ist, die Bewegung der Antriebswelle (2) auf die Zapfwelle zu übertragen, zur Drehung in einer ersten Richtung; und
• Koppeln eines Zahnrads (6), das über die Abtriebswelle (3) antreibbar ist, und eines rotierenden Bauteils (14) des Antriebssystems (13,14,15), das starr mit der Zapfwelle verbunden ist, zur Drehung in der ersten Richtung, um die Bewegung der Abtriebswelle (3) auf die Zapfwelle zu übertragen.

6. Verfahren nach Anspruch 5, wobei die Drehbewegung der Abtriebswelle (5) auf die Zapfwelle übertragen wird, wenn die Antriebswelle (2) von dem Motor nicht angetrieben wird oder mit einer niedrigeren Geschwindigkeit als die Geschwindigkeit der Abtriebswelle (3) angetrieben wird.

7. Verfahren nach Anspruch 5 oder 6, wobei die Drehbewegung der Abtriebswelle (3) über die Antriebswelle oder über das Zahnrad (6), das von der Abtriebswelle (3) angetrieben werden kann, auf die Zapfwelle übertragen wird.

8. Verfahren nach einem der Ansprüche 5 bis 7, wobei
• der Schritt des Koppelns der Antriebswelle (2) und eines ersten rotierenden Bauteils (13) eines Antriebssystems (13,15,14) zur Drehung in einer ersten Richtung von einem ersten Gesperr (16,17) vorgenommen wird; und
• der Schritt des Koppelns des Zahnrads (6), das von der Abtriebswelle angetrieben werden kann, und eines zweiten rotierenden Bauteils (14) des Antriebssystems (13,14,15), das starr mit der Zapfwelle verbunden ist, zur Drehung in einer ersten Richtung von einem zweiten Gesperr (18,19) vorgenommen wird.

9. Verfahren nach Anspruch 5, wobei die Übertragung der vom Motor auf die Antriebswelle (2) vermittelten Drehbewegung auf die Zapfwelle und die Übertragung der Drehbewegung der Abtriebswelle (3) über die Antriebswelle (2) auf die Zapfwelle zudem den Schritt enthält, dass
• die Bewegung des ersten rotierenden Bauteils (13) auf das zweite rotierende Bauteil (14) des Antriebssystems (13,15,14) zur Rotation der Zapfwelle übertragen wird.

10. Getriebe (1) für Kraftfahrzeuge, mit einer Zapfwelle und einer Vorrichtung nach einem der Ansprüche 1 bis 4 zum Betreiben der Zapfwelle.

## Revendications

1. Dispositif pour faire fonctionner une prise de force dans un véhicule à moteur par l'intermédiaire d'une boîte de vitesses mécanique (1), la boîte de vitesse comprenant :
- un arbre d'entrée (2), lequel peut être réalisé pour être mis en rotation par le moteur du véhicule ;
- un arbre de sortie (3) relié aux roues motrices du véhicule ; et
- un mécanisme cinématique (10) agencé pour transmettre à la prise de force le mouvement rotatif transmis, respectivement, à l'arbre d'entrée (2) ou à l'arbre de sortie (3), ledit mouvement rotatif de l'arbre de sortie (3) étant transmis, soit par la rotation de l'arbre d'entrée (2), soit par le déplacement du véhicule ;
le dispositif étant **caractérisé en ce que** ledit mécanisme cinématique (10) comprend :
- une première roue à rochet (16, 17) agencée en vue de rendre solidaire en rotation dans une première direction l'arbre d'entrée (2) et un premier élément tournant (13) d'un système d'entraînement (13, 15, 14) agencé pour transmettre à la prise de force le mouvement de l'arbre d'entrée (2) ; et
- une seconde roue à rochet (18, 19) agencée en vue de rendre solidaire en rotation dans la première direction un engrenage (6) pouvant être actionné par l'arbre de sortie (3) et un second élément tournant (14) du système d'entraînement (13, 15, 14), relié à la prise de force de façon rigide dans le but de transmettre à la prise de force le mouvement de l'arbre de sortie (3).

2. Dispositif selon la revendication 1, dans lequel le mécanisme cinématique (10) est agencé pour transmettre à la prise de force le mouvement rotatif de l'arbre de sortie (3) lorsque l'arbre d'entrée (2) n'est pas actionné par le moteur ou est actionné à une vitesse inférieure à celle qui est transmise à l'arbre de sortie (3).

3. Dispositif selon la revendication 1 ou 2, dans lequel le mécanisme cinématique (10) est agencé pour transmettre à la prise de force le mouvement rotatif de l'arbre de sortie (3) par l'intermédiaire de l'arbre d'entrée (2) ou par l'intermédiaire de l'engrenage (6) pouvant être actionné par l'arbre de sortie (3).

4. Dispositif selon l'une quelconque des revendications précédentes, dans lequel le mécanisme cinématique (10) comprend :
- un premier pignon d'engrenage (13) monté en pignon fou sur l'arbre d'entrée (2) ;
- un second pignon d'engrenage (14), solidaire en rotation avec la prise de force ;
- une chaîne (15) enroulée sur les premier et second pignons d'engrenage (13, 14) pour transmettre à la prise de force le mouvement rotatif du premier pignon d'engrenage (13) ;
et dans lequel la première roue à rochet comprend une denture (17) située sur l'arbre d'entrée (2) et un cliquet (16) monté pivotant sur le premier pignon d'engrenage (13), et la seconde roue à rochet comprend une denture (19) située sur la prise de force et un cliquet (18) monté pivotant sur l'engrenage (6) pouvant être actionné par l'arbre de sortie.

5. Procédé pour faire fonctionner une prise de force dans un véhicule à moteur par l'intermédiaire d'une boîte de vitesse (1), comprenant l'étape de :
- transmettre à la prise de force le mouvement rotatif transmis, respectivement, soit à un arbre d'entrée (2) de la boîte de vitesses (1), soit à un arbre de sortie (3) de la boîte de vitesses (1), ledit mouvement rotatif de l'arbre de sortie (3) étant transmis, soit par la rotation de l'arbre d'entrée (2), soit par le déplacement du véhicule,
**caractérisé en ce que** ladite étape de transmission du mouvement rotatif comprend les étapes de :
- rendre solidaires en rotation dans une première direction, l'arbre d'entrée (2) et un premier élément tournant (13) d'un système d'entraînement (13, 15, 14) agencé pour transmettre à la prise de force le mouvement de l'arbre d'entrée (2) ; et
- rendre solidaires en rotation dans la première direction, un engrenage (6) pouvant être actionné par l'arbre de sortie (3) et un second élément tournant (14) du système d'entraînement (13, 15, 14) relié de façon rigide à la prise de force dans le but de transmettre à la prise de force le mouvement de l'arbre de sortie (3).

6. Procédé selon la revendication 5, dans lequel le mouvement rotatif de l'arbre de sortie (3) est transmis à la prise de force lorsque l'arbre d'entrée (2) n'est pas actionné par le moteur ou est actionné à une vitesse inférieure à celle de l'arbre de sortie (3).

7. Procédé selon la revendication 5 ou 6, dans lequel le mouvement rotatif de l'arbre de sortie (3) est transmis à la prise de force par l'intermédiaire de l'arbre d'entrée (2) ou par l'intermédiaire de l'engrenage (6) pouvant être actionné par l'arbre de sortie (3).

8. Procédé selon l'une quelconque des revendications 5 à 7, dans lequel :
- l'étape consistant à rendre l'arbre d'entrée (2) et un premier élément tournant (13) d'un système d'entraînement (13, 15, 14) solidaires en rotation dans une première direction est réalisée par une première roue à rochet (16, 17) ; et
- l'étape consistant à rendre l'engrenage (6) actionnable par l'arbre de sortie et un second élément tournant (14) du système d'entraînement (13, 15, 14), relié de façon rigide à la prise de force, solidaires en rotation dans la première direction est réalisée par une seconde roue à rochet (18, 19).

9. Procédé selon la revendication 5, dans lequel la transmission à la prise de force du mouvement rotatif transmis par le moteur à l'arbre d'entrée (2) et la transmission à la prise de force du mouvement rotatif de l'arbre de sortie (3) par l'intermédiaire de l'arbre d'entrée (2) comprend, de plus, l'étape de :
- transmettre le mouvement du premier élément tournant (13) au second élément tournant (14) du système d'entraînement (13, 15, 14), solidaire en rotation à la prise de force.

10. Boîte de vitesses mécanique (1) pour des véhicules à moteur, comprenant une prise de force et un dispositif, selon l'une quelconque des revendications 1 à 4, agencé pour faire fonctionner la prise de force.
